# EUROPEAN PATENT APPLICATION

(11) **EP 4 209 456 A1**
(43) Date of publication of application: **12.07.2023**
(21) Application number: 22806363.2
(22) Date of filing: 06.04.2022
(51) Int. Cl.: C01B 25/45, H01M 4/58, H01M 10/0525

(54) **PREPARATION METHOD FOR LITHIUM IRON PHOSPHATE**

(30) Priority: 12.05.2021 CN 202110517470
(71) Applicant: SVOLT ENERGY TECHNOLOGY CO., LTD, Changzhou, Jiangsu 213200 (CN)
(72) Inventor: WAN, Jiangtao, hangzhou, Jiangsu 213200 (CN); ZHANG, Ning, hangzhou, Jiangsu 213200 (CN); ZHANG, Yongjie, hangzhou, Jiangsu 213200 (CN); LIU, Manku, hangzhou, Jiangsu 213200 (CN); LI, Zitan, hangzhou, Jiangsu 213200 (CN)
(74) Representative: Glawe, Delfs, Moll
(86) International application number: PCT/CN2022/085377
(87) International publication number: WO 2022/237393

(57) **Abstract**

The present disclosure provides a method for preparing lithium iron phosphate. The preparation method includes: step S1. mixing an iron source, a phosphorus source and a pH buffering agent to obtain a mixed solution; step S2. subjecting the mixed solution to a hydrothermal reaction to obtain an iron phosphate precursor; and step S3. mixing the iron phosphate precursor, the lithium source and the carbon source, and sintering it to obtain the lithium iron phosphate, wherein the pH buffering agent includes a compound containing a carboxylate radical. The pH buffering agent containing the carboxylate radical can not only act for complexation, but also have an extremely significant pH buffering effect, which is critical for controlling the stability of the whole reaction system, so that the final lithium iron phosphate has a simplified phase, a stable product performance, good flowability and high conductivity. Further, the lithium iron phosphate used as a positive electrode material makes a battery have excellent electrical performances such as conductivity and rate capability. In addition, the aforementioned preparation process is simple, energy-saving, and reduces the reaction cost.

## Description

### Cross-Reference to Related Application

The present application is based on and claims the priority of the Chinese application with a CN application number of 202110517470.5, filed on May 12, 2021. The disclosure of this CN application is once again incorporated into the present application as a whole.

### Technical Field

The present disclosure relates to the technical field of synthesis of lithium iron phosphate, and in particular to a method for preparing lithium iron phosphate.

### Background

As a chemical raw material, iron phosphate has wide application. It plays an important role in the field of lithium-ion battery materials because of its unique electrochemical performance. In the field of battery materials, iron phosphate has become an ideal electrode material for an electric vehicle battery since it can be directly used as an intercalated electrode of a lithium-ion battery, has high thermal stability and good electrochemical cycling performance.

Currently, a traditional process employs ammonium dihydrogen phosphate, ferrous oxalate and lithium carbonate to synthesize lithium iron phosphate through physically mixing and calcining at a high temperature. Although these methods have already achieved mass production in the early stage, they are gradually replaced by other methods since a product has a particle size which is not easy to control, uneven distribution and irregular morphology.

In fact, there are many processes for synthesizing iron phosphate. In modern industrial production, iron phosphate is generally prepared by employing a precipitation method with ferric sulfate or other soluble iron salts as an iron source, phosphoric acid or a phosphate as a phosphorus source, and NaOH as a pH regulator. In the preparation process, heating is generally required, and then the iron phosphate is used as a precursor and added with lithium carbonate for high-temperature synthesis of lithium iron phosphate.

Y. Huang kept ferrous sulfate, phosphoric acid and hydrogen peroxide as raw materials at a temperature of 80°C in a water bath with a pH in the range of 1-2 for 12 hours to obtain iron phosphate, and then used lithium hydroxide as a lithium source to prepare a material of lithium iron phosphate with a high rate performance. However, in actual production, the process has strict requirements on the control of the pH value, which generally needs to be controlled between 1.6-2.0, since an impurity of Fe(OH)₃ may precipitate when the pH value is too high while it will lead to incomplete precipitation of Fe³⁺ when the pH value is too low. However, such pH adjustment often leads to generation of a local impurity phase of iron hydroxide due to the too strong alkalinity of NaOH or ammonium hydroxide. Thereafter, it needs to keep the impurity phase at a high temperature for a relatively longer period of time before most of the impurity phase is removed, but there is still a little residue of it, which not only wastes energy, but also affects the ratio of phosphorus to iron in the lithium iron phosphate, thereby reducing the purity and electrochemical performance of the lithium iron phosphate.

### Summary

A main objective of the present disclosure is to provide a method for preparing lithium iron phosphate, so as to solve the problem of relatively lower purity of a lithium iron phosphate material in the prior art.

In order to achieve the aforementioned objective, according to one aspect of the present disclosure, provided is a method for preparing lithium iron phosphate, which includes: step S1. mixing an iron source, a phosphorus source and a pH buffering agent to obtain a mixed solution; step S2. subjecting the mixed solution to a hydrothermal reaction to obtain an iron phosphate precursor; and step S3. mixing the iron phosphate precursor, the lithium source and the carbon source, and sintering that to obtain the lithium iron phosphate, wherein the pH buffering agent includes a compound containing a carboxylate radical.

Further, a molar ratio of the aforementioned pH buffering agent to iron ions in the aforementioned iron source is 0.005-0.05:1.

Further, the aforementioned pH buffering agent is selected from any one or more of chloroacetic acid, ammonium acetate and potassium hydrogen phthalate.

Further, a pH value of the aforementioned mixed solution is 2.3-4.8.

Further, the aforementioned mixed solution further includes a surfactant, and the step S1 includes: mixing the iron source and the phosphorus source to obtain a first solution; and adding the surfactant and the pH buffering agent into the first solution to obtain a mixed solution.

Further, a ratio of the mass of the aforementioned surfactant to the volume of the aforementioned first solution is 0.1-5 g: 1 L.

Further, the surfactant is sodium dodecyl benzene sulfonate and/or sodium dodecyl sulfate.

Further, a pH value of the mixed solution is controlled to be 2.3-4.8 in the process of the aforementioned hydrothermal reaction.

Further, a temperature of the aforementioned hydrothermal reaction is 50-90°C.

Further, a time of the aforementioned hydrothermal reaction is 5-12 h.

Further, stirring is carried out in the process of the hydrothermal reaction.

Further, a speed of the aforementioned stirring is 1,000-2,000 r/min.

Further, a molar ratio of the aforementioned iron source to the aforementioned iron phosphate precursor is 1-1.08:1.

Further, the aforementioned iron source is selected from any one or more of ferric sulfate, ferric nitrate and ferric chloride.

Further, a process of the aforementioned sintering includes a first section of sintering and a second section of sintering that are conducted sequentially, wherein a temperature of the first section of sintering is 300-500°C.

Further, a time of the aforementioned first section of sintering is 3-6 h.

Further, a temperature of the aforementioned second section of sintering is 700-750°C.

Further, a time of the aforementioned second section of sintering is 8-15 h.

Further, the iron phosphate precursor is dried before the first section of sintering.

Further, a molar ratio of the aforementioned lithium source to the aforementioned phosphorus source is 1.02-1.06:1.

Further, the aforementioned phosphorus source is selected from any one or more of phosphoric acid, ammonium dihydrogen phosphate and sodium dihydrogen phosphate.

Further, the aforementioned lithium source is lithium carbonate and/or lithium hydroxide.

Further, the aforementioned carbon source is 10-25wt% of the total amount of the iron phosphate precursor, the lithium source and the carbon source.

Further, the aforementioned carbon source is selected from any one or more of glucose, fructose and maltose.

By applying the technical solution of the present disclosure, the pH buffering agent containing the carboxylate radical can not only act for complexation, but also have an extremely significant pH buffering effect, which is critical for controlling the stability of the whole reaction system. On one hand, the pH buffering agent can be complexed with the iron ions in the mixed solution, thereby greatly inhibiting early precipitation of the iron ions in the form of ferric hydroxide, and in turn reducing the content of the impurity phase of ferric hydroxide in the iron phosphate precursor. On the other hand, the pH buffering agent is used instead of strong alkaline substances such as sodium hydroxide to make the mixed solution reach a certain pH value, which avoids the generation of the local impurity phase of ferric hydroxide caused by too strong alkalinity of NaOH or ammonium hydroxide, thereby making the lithium iron phosphate obtained after sintering has a simplified phase, a stable product performance, good flowability and narrow particle size distribution, and finally not only improving the purity of the lithium iron phosphate, but also improving the yield thereof. Moreover, the carbon source is converted into a reductive substance such as carbon, CO and the like in the process of the sintering, which can not only inhibit occurrence of an oxidative side reaction in the process of the sintering as much as possible, but also make the carbon included therein partially doped in the lithium iron phosphate and partially cladded on the surface of the lithium iron phosphate, thereby improving the conductivity of the lithium iron phosphate, and in turn improving its electrical conductivity. Further, use of the lithium iron phosphate as a positive electrode material makes a battery have excellent electrical performances such as conductivity and rate capability. In addition, the aforementioned preparation process is simple, energy-saving, and reduces the reaction cost.

### Detailed Description of the Embodiments

It should be noted that the examples in the present application and the features in the examples can be combined with each other without conflict. The present disclosure will be described in detail below with reference to examples.

As analyzed in the Background, due to the generation of the local impurity phase of ferric hydroxide caused by too strong alkalinity of NaOH or ammonium hydroxide, thereafter it needs to keep the impurity phase at a high temperature for a relatively longer period of time before most of the impurity phase is removed, but there is still a little residue of it, thereby leading to the problem of relatively lower of the prepared lithium iron phosphate in the prior art. In order to solve this problem, the present disclosure provides a method for preparing lithium iron phosphate.

In a typical embodiment of the present application, provided is a method for preparing lithium iron phosphate, which includes: step S1. mixing an iron source, a phosphorus source and a pH buffering agent to obtain a mixed solution; step S2. subjecting the mixed solution to a hydrothermal reaction to obtain an iron phosphate precursor; and step S3. mixing the iron phosphate precursor, the lithium source and the carbon source, and sintering that to obtain the lithium iron phosphate, wherein the pH buffering agent includes a compound containing a carboxylate radical.

The pH buffering agent containing the carboxylate radical can not only act for complexation, but also have an extremely significant pH buffering effect, which is critical for controlling the stability of the whole reaction system. On one hand, the pH buffering agent can be complexed with the iron ions in the mixed solution, thereby greatly inhibiting early precipitation of the iron ions in the form of ferric hydroxide, and in turn reducing the content of the impurity phase of ferric hydroxide in the iron phosphate precursor. On the other hand, the pH buffering agent is used instead of strong alkaline substances such as sodium hydroxide to make the mixed solution reach a certain pH value, which avoids the generation of the local impurity phase of ferric hydroxide caused by too strong alkalinity of NaOH or ammonium hydroxide, thereby making the lithium iron phosphate obtained after sintering has a simplified phase, a stable product performance, good flowability and narrow particle size distribution, and finally not only improving the purity of the lithium iron phosphate, but also improving the yield thereof. Moreover, the carbon source is converted into a reductive substance such as carbon, CO and the like in the process of the sintering, which can not only inhibit occurrence of an oxidative side reaction in the process of the sintering as much as possible, but also make the carbon included therein partially doped in the lithium iron phosphate and partially cladded on the surface of the lithium iron phosphate, thereby improving the conductivity of the lithium iron phosphate, and in turn improving its electrical conductivity. Further, use of the lithium iron phosphate as a positive electrode material makes a battery have excellent electrical performances such as conductivity and rate capability. In addition, the aforementioned preparation process is simple, energy-saving, and reduces the reaction cost.

In an embodiment of the present application, a molar ratio of the aforementioned pH buffering agent to iron ions in the aforementioned iron source is 0.005-0.05:1.

The aforementioned pH buffering agent includes a hydrophilic carboxylate radical, so that it has a relatively better dispersibility in an aqueous phase, thereby being more conducive to the coordination between the carboxylate radical of it and the iron ions. Moreover, controlling the molar ratio of the pH buffering agent to the iron ions in the iron source within the aforementioned range is conducive to reducing the precipitation of the iron ions as much as possible, and is also helpful to control the overall pH value of the mixed solution, so as to reduce the content of the impurity phase of ferric hydroxide to minimum synergistically.

In order to improve the dispersibility of the pH buffering agent in the aqueous phase as much as possible and thus improve the stability of the whole reaction system, it is preferred that the pH buffering agent has a small molecular weight, and it is further preferred that the pH buffering agent is selected from any one or more of chloroacetic acid, ammonium acetate and potassium hydrogen phthalate. Of course, other pH buffering agents can also be selected by those skilled in the art according to actual needs, which will not be described here anymore.

In some embodiments of the present application, a pH value of the aforementioned mixed solution is 2.3-4.8, thereby being conducive to improving the stability of the iron ions in the mixed solution as much as possible, and reducing the difficulty of pH adjustment in the process of the coprecipitation reaction.

In an embodiment of the present application, the aforementioned mixed solution further includes a surfactant, and the step S1 includes: mixing the iron source and the phosphorus source to obtain a first solution; and adding the surfactant and the pH buffering agent into the first solution to obtain a mixed solution, wherein preferably a ratio of the mass of the surfactant to the volume of the first solution is 0.1-5 g:1 L, and further preferably, the surfactant is sodium dodecyl benzene sulfonate and/or sodium dodecyl sulfate.

The surfactant is helpful to control the magnitude of the subsequent particle size of the lithium iron phosphate. In order to obtain the lithium iron phosphate with a uniform particle size as much as possible, the aforementioned surfactant is preferred. Of course, other surfactants can also be selected by those skilled in the art according to the actual situation, which will not be described here anymore.

In order to improve the efficiency of the aforementioned hydrothermal reaction as much as possible and shorten the time of the hydrothermal reaction, preferably in the process of the aforementioned hydrothermal reaction the pH value of the mixed solution is controlled to be 2.3-4.8, preferably the temperature of the hydrothermal reaction is 50-90°C, preferably the time of the hydrothermal reaction is 5-12 h, preferably stirring is conducted in the process of the hydrothermal reaction, and preferably the speed of the stirring is 1,000-2,000 r/min. The stirring is conducive to obtaining the lithium iron phosphate with a uniform size.

In order to have a more appropriate ratio between iron and phosphorus and the like elements and thus to obtain the lithium iron phosphate with a more stable composition synergistically, preferably a molar ratio of the aforementioned iron source to the aforementioned iron phosphate precursor is 1-1.08:1, and preferably the iron source is selected from any one or more of ferric sulfate, ferric nitrate and ferric chloride.

In order to improve the mutual synergistic effect among the iron phosphate precursor, the lithium source and the carbon source and enable the formed lithium iron phosphate to have stable and excellent performances, preferably a process of the aforementioned sintering includes a first section of sintering and a second section of sintering that are conducted sequentially, wherein a temperature of the first section of sintering is 300-500°C, and preferably a time of the first section of sintering is 3-6 h; preferably a temperature of the second section of sintering is 700-750°C, and preferably a time of the second section of sintering is 8-15 h. Among them, the first section of sintering at a lower temperature can remove small molecular substances such as water, carbon dioxide, carbon monoxide and the like after decomposition of the carbon source, so as to reduce the influence of these small molecular substances on the crystallinity of the lithium iron phosphate during the second section of sintering (at a higher temperature) as much as possible. In order to reduce the influence of the moisture in the doped iron phosphate precursor on the sintering process, preferably the iron phosphate precursor is dried before the first section of sintering, and preferably a temperature of the drying is 200°C.

In an embodiment of the present application, a molar ratio of the aforementioned lithium source to the aforementioned phosphorus source is 1.02-1.06:1, preferably the phosphorus source is selected from any one or more of phosphoric acid, ammonium dihydrogen phosphate and sodium dihydrogen phosphate, and preferably the lithium source is lithium carbonate and/or lithium hydroxide.

The aforementioned ratio of the lithium source to the phosphorus source and their respective categories are more helpful to control the ratio of lithium to phosphorus in a composite and more stable lithium iron phosphate molecule.

The carbon source generates a conductive carbon substance in the sintering process. In order to further improve the decomposition efficiency of the carbon source and thus improve the conductivity of the lithium iron phosphate more fully, preferably the aforementioned carbon source is 10-25wt% of the total amount of the iron phosphate precursor, the lithium source and the carbon source, and preferably the carbon source is selected from any one or more of glucose, fructose and maltose.

The beneficial effects of the present application will be illustrated hereafter with reference to specific examples and comparative examples.

### Example 1

1.05 parts of ferric trichloride and 1 part of phosphoric acid were weighed according to a ratio of 1.05:1 to prepare a first solution in which the molar concentration of ferric trichloride was 5 mol/L. Then, chloroacetic acid (the ratio of the mass of chloroacetic acid to the volume of the first solution was 2 g:1 L), ammonium acetate (the ratio of the mass of ammonium acetate to the volume of the first solution was 2 g:1 L) and sodium dodecyl benzene sulfonate (the ratio of the mass of sodium dodecyl benzene sulfonate to the volume of the first solution was 0.5 g:1 L) were weighed and added into the first solution, and potassium hydrogen phthalate was weighed and added into the first solution to prepare a 0.04 mol/L solution of the potassium hydrogen phthalate, and then the pH of the system was adjusted to 3.5 with sodium hydroxide (0.5 mol/L) and hydrochloric acid (0.5 mol/L), so as to obtain a mixed solution.

Then the mixed solution was heated to 70°C, and the materials were allowed to react through a hydrothermal reaction at a controlled rotation speed of 1,500 r/min. A temperature continuously controlled at 70°C, a pH value of the mixed solution controlled to be 3.5 in the process of the hydrothermal reaction for a time of 8 hours. The product was centrifuged, dehydrated and washed for three times. The moisture content of a wet material was controlled to be 25-35%, and then this wet material was placed into a bowl and dried at 180°C for 48 h to obtain a 3.5-micron disk-type precursor with a thickness of about 100 nm as an iron phosphate precursor. The iron phosphate precursor was added with lithium hydroxide (with the molar ratio of lithium hydroxide to phosphoric acid of 1.02:1) and glucose (which was 20wt% of the total amount of the iron phosphate precursor, lithium hydroxide and glucose), subjected to ball milling with ethanol as a dispersant for 2 h, mixed fully, subjected to a first section of sintering at a temperature of 350°C under the protection of nitrogen for 5 hours, and then heated to 700°C and continued to be subjected to a second section of sintering for 15 hours, Then obtained 1.029 parts of lithium iron phosphate, and it could be seen upon analysis that the ratio of iron to phosphorus in this material was 1.01:1.

### Example 2

1.03 parts of ferric nitrate and 1 part of phosphoric acid were weighed according to a ratio of 1.03:1 to prepare a first solution in which the molar concentration of ferric trichloride was 5 mol/L. Then, chloroacetic acid (the ratio of the mass of chloroacetic acid to the volume of the first solution was 3 g:1 L), ammonium acetate (the ratio of the mass of ammonium acetate to the volume of the first solution was 4 g:1 L) and sodium dodecyl benzene sulfonate (the ratio of the mass of sodium dodecyl benzene sulfonate to the volume of the first solution was 1 g:1 L) were weighed and added into the first solution, and potassium hydrogen phthalate was weighed and added into the first solution to prepare a 0.04 mol/L solution of the potassium hydrogen phthalate, and then the pH of the system was adjusted to 2.8 with sodium hydroxide (0.5 mol/L) and hydrochloric acid (0.5 mol/L), so as to obtain a mixed solution.

Then the mixed solution was heated to 90°C, and the materials were allowed to react through a hydrothermal reaction at a controlled rotation speed of 2000 r/min, a temperature continuously controlled at 70°C, a pH value of the mixed solution controlled to be 2.8 in the process of the hydrothermal reaction for a time of 6 hours. The product was centrifuged, dehydrated and washed for three times. The moisture content of a wet material was controlled to be 25-35%, and then this wet material was placed into a bowl and dried at 180°C for 48 h to obtain a 2-micron disk-type precursor with a thickness of about 100 nm as an iron phosphate precursor. The iron phosphate precursor was added with lithium hydroxide (with the molar ratio of lithium hydroxide to phosphoric acid of 1.03:1) and glucose (which was 25wt% of the total amount of the iron phosphate precursor, lithium hydroxide and glucose), subjected to ball milling with ethanol as a dispersant for 2 h, mixed fully, subjected to a first section of sintering at a temperature of 380°C under the protection of nitrogen for 5 hours, and then heated to 750°C and continued to be subjected to a second section of sintering for 12 hours. Then obtained 1.004 parts of lithium iron phosphate, and it could be seen upon analysis that the ratio of iron to phosphorus in this material was 0.995:1.

### Example 3

1.01 parts of ferric trichloride and 1 part of phosphoric acid were weighed according to a ratio of 1.01:1 to prepare a first solution in which the molar concentration of ferric trichloride was 5 mol/L, Then, chloroacetic acid (the ratio of the mass of chloroacetic acid to the volume of the first solution was 5 g:1 L), ammonium acetate (the ratio of the mass of ammonium acetate to the volume of the first solution was 10 g:1 L) and sodium dodecyl benzene sulfonate (the ratio of the mass of sodium dodecyl benzene sulfonate to the volume of the first solution was 1.5 g:1 L) were weighed and added into the first solution, and then the pH of the system was adjusted to 4.5 with sodium hydroxide (0.5 mol/L) and hydrochloric acid (0.5 mol/L), so as to obtain a mixed solution.

Then the mixed solution was heated to 50°C, and the materials were allowed to react through a hydrothermal reaction at a controlled rotation speed of 1800 r/min, a temperature continuously controlled at 50°C, a pH value of the mixed solution controlled to be 3.5 in the process of the hydrothermal reaction for a time of 7 hours. The product was centrifuged, dehydrated and washed for three times. The moisture content of a wet material was controlled to be 25-35%, and then this wet material was placed into a bowl and dried at 180°C for 48 h to obtain a 4-micron disk-type precursor with a thickness of about 150 nm as an iron phosphate precursor. The iron phosphate precursor was added with lithium hydroxide (with the molar ratio of lithium hydroxide to phosphoric acid of 1.02:1) and glucose (which was 15wt% of the total amount of the iron phosphate precursor, lithium hydroxide and glucose), subjected to ball milling with ethanol as a dispersant for 2 h, mixed fully, subjected to a first section of sintering at a temperature of 400°C under the protection of nitrogen for 3 hours, and then heated to 720°C and continued to be subjected to a second section of sintering for 12 hours. Then obtained 0.9877 parts of lithium iron phosphate, and it could be seen upon analysis that the ratio of iron to phosphorus in this material was 0.99:1.

### Example 4

The difference between Example 4 and Example 1 was that,
the molar ratio of the total molar weight of chloroacetic acid, ammonium acetate and potassium hydrogen phthalate to that of the iron ions in ferric trichloride was 0.05:1, and finally obtained 1.030 parts of the lithium iron phosphate.

### Example 5

The difference between Example 5 and Example 1 was that,
the molar ratio of the total molar weight of chloroacetic acid, ammonium acetate and potassium hydrogen phthalate to that of the iron ions in ferric trichloride was 0.005:1, and finally obtained 1.0322 parts of the lithium iron phosphate.

### Example 6

The difference between Example 6 and Example 1 was that,
the molar ratio of the total molar weight of chloroacetic acid, ammonium acetate and potassium hydrogen phthalate to that of the iron ions in ferric trichloride was 0.004:1, and finally obtained 1.0070 parts of the lithium iron phosphate.

### Example 7

The difference between Example 7 and Example 1 was that,
the molar ratio of the total molar weight of chloroacetic acid, ammonium acetate and potassium hydrogen phthalate to that of the iron ions in ferric trichloride was 0.08:1, and finally obtained 1.0080 parts of the lithium iron phosphate.

### Example 8

The difference between Example 8 and Example 1 was that,
the pH value of the mixed solution was 2.3, the pH value of the mixed solution was controlled to be 2.3 in the process of the hydrothermal reaction, and finally obtained 1.0301 parts of the lithium iron phosphate.

### Example 9

The difference between Example 9 and Example 1 was that,
the pH value of the mixed solution was 4.8, the pH value of the mixed solution was controlled to be 4.8 in the process of the hydrothermal reaction, and finally obtained 1.0343 parts of the lithium iron phosphate.

### Example 10

The difference between Example 10 and Example 1 was that,
the pH value of the mixed solution was 1.5, the pH value of the mixed solution was controlled to be 1.5 in the process of the hydrothermal reaction, and finally obtained 1.0028 parts of the lithium iron phosphate.

### Example 11

The difference between Example 11 and Example 1 was that,
the ratio of the mass of sodium dodecyl benzene sulfonate to the volume of the first solution was 0.1 g:1 L, and finally obtained 1.0301 parts of the lithium iron phosphate.

### Example 12

The difference between Example 12 and Example 1 was that,
the ratio of the mass of sodium dodecyl benzene sulfonate to the volume of the first solution was 5 g:1 L, and finally obtained 1.0353 parts of the lithium iron phosphate.

### Example 13

The difference between Example 13 and Example 1 was that,
no sodium dodecyl benzene sulfonate was added, and finally obtained 1.0038 parts of the lithium iron phosphate.

### Comparative Example 1

The difference between Comparative Example 1 and Example 1 was that,
a sodium hydroxide solution was used instead of chloroacetic acid, ammonium acetate and potassium hydrogen phthalate to adjust the reaction system to react under the condition of a pH value of 1.5. The ratio of an impurity phase in the produced product was relatively large. After three times of washing with a weak acid, the ratio of iron to phosphorus could only reach 1.03:1, and the capacity was as low as 132 mAh/g.

The lithium iron phosphates prepared by the aforementioned Examples 1 to 13 and Comparative Example 1 were tested respectively for purities and yields, which were listed in Table 1.

**Table 1**

| Example/Comparative Example | Purity/% | Yield/% |
|---|---|---|
| Example 1 | 99.4 | 98.0 |
| Example 2 | 99.5 | 97.5 |
| Example 3 | 99.2 | 97.8 |
| Example 4 | 99.3 | 98.1 |
| Example 5 | 99.4 | 98.3 |
| Example 6 | 94.2 | 95.9 |
| Example 7 | 94.3 | 96.0 |
| Example 8 | 99.4 | 98.1 |
| Example 9 | 98.2 | 98.5 |
| Example 10 | 94.1 | 95.5 |
| Example 11 | 99.4 | 98.1 |
| Example 12 | 99.6 | 98.6 |
| Example 13 | 94.4 | 95.6 |
| Comparative Example 1 | 87.0 | 95.2 |

The lithium iron phosphates prepared in the aforementioned Examples 1 to 13 and Comparative Example 1 were respectively prepared into positive electrode sheets, and then each of the positive electrode sheets was assembled with a lithium metal negative electrode and a electrolyte solution of 1mol/L LiPF₆/EC + DMC + DEC (1:1:1) to form a button battery. The button battery was tested for its discharge capacity and cycling capacity retention rate at a condition of 1C, and the test results were shown in Table 2.

**Table 2**

| Example/Comparative Example | Cycling capacity Retention rate/% | Discharge capacity/mAh/g |
|---|---|---|
| Example 1 | 99.8 | 158 |
| Example 2 | 99.9 | 160 |
| Example 3 | 99.8 | 157 |
| Example 4 | 99.5 | 154 |
| Example 5 | 99.3 | 153 |
| Example 6 | 99.7 | 143 |
| Example 7 | 99.6 | 142 |
| Example 8 | 99.4 | 153 |
| Example 9 | 99.6 | 155 |
| Example 10 | 99.8 | 140 |
| Example 11 | 99.1 | 155 |
| Example 12 | 99.5 | 158 |
| Example 13 | 98.8 | 141 |
| Comparative Example 1 | 96.0 | 132 |

From the aforementioned description, it can be seen that the aforementioned embodiments of the present disclosure achieve the following technical effects:
The pH buffering agent containing the carboxylate radical can not only act for complexation, but also have an extremely significant pH buffering effect, which is critical for controlling the stability of the whole reaction system. On one hand, the pH buffering agent can be complexed with the iron ions in the mixed solution, thereby greatly inhibiting early precipitation of the iron ions in the form of ferric hydroxide, and in turn reducing the content of the impurity phase of ferric hydroxide in the iron phosphate precursor. On the other hand, the pH buffering agent is used instead of strong alkaline substances such as sodium hydroxide to make the mixed solution reach a certain pH value, which avoids the generation of the local impurity phase of ferric hydroxide caused by too strong alkalinity of NaOH or ammonium hydroxide, thereby making the lithium iron phosphate obtained after sintering has a simplified phase, a stable product performance, good flowability and narrow particle size distribution, and finally not only improving the purity of the lithium iron phosphate, but also improving the yield thereof. Moreover, the carbon source is converted into a reductive substance such as carbon, CO and the like in the process of the sintering, which can not only inhibit occurrence of an oxidative side reaction in the process of the sintering as much as possible, but also make the carbon included therein partially doped in the lithium iron phosphate and partially cladded on the surface of the lithium iron phosphate, thereby improving the conductivity of the lithium iron phosphate, and in turn improving its conductivity. Further, use of the lithium iron phosphate as an positive electrode material makes a battery have excellent electrical performances such as conductivity and rate capability. In addition, the aforementioned preparation process is simple, energy-saving, and reduces the reaction cost.

The above is only preferred embodiments of the present disclosure, and is not used for limiting the present disclosure. For those skilled in the art, various modifications and variations can be made to the present disclosure. Any modifications, equivalent substitutions, improvements, etc. made within the spirit and scope of the present disclosure should be included within the claimed scope of the present disclosure.

## Claims

1. A method for preparing lithium iron phosphate, comprising:
step S1, mixing an iron source, a phosphorus source and a pH buffering agent to obtain a mixed solution;
step S2, subjecting the mixed solution to a hydrothermal reaction to obtain an iron phosphate precursor; and
step S3, mixing the iron phosphate precursor, a lithium source and a carbon source, and sintering it to obtain the lithium iron phosphate,
wherein the pH buffering agent comprises a compound containing a carboxylate radical.

2. The preparation method according to claim 1, wherein a molar ratio of the pH buffering agent to the iron ions in the iron source is 0.005-0.05:1.

3. The preparation method according to claim 1 or 2, wherein the pH buffering agent is selected from any one or more of chloroacetic acid, ammonium acetate and potassium hydrogen phthalate.

4. The preparation method according to claim 1 or 2, wherein a pH value of the mixed solution is 2.3-4.8.

5. The preparation method according to claim 1 or 2, wherein the mixed solution further comprises a surfactant, and the step S1 comprises:
mixing the iron source and the phosphorus source to obtain a first solution;
adding the surfactant and the pH buffering agent into the first solution to obtain the mixed solution,
wherein a ratio of the mass of the surfactant to the volume of the first solution is 0.1-5 g:1 L, and the surfactant is sodium dodecyl benzene sulfonate and/or sodium dodecyl sulfate.

6. The preparation method according to claim 1 or 2, wherein the pH value of the mixed solution is controlled to be 2.3-4.8 in the process of the hydrothermal reaction, a temperature of the hydrothermal reaction is 50-90°C, and a time of the hydrothermal reaction is 5-12 h.

7. The preparation method according to claim 1, wherein a molar ratio of the iron source to the iron phosphate precursor is 1-1.08:1.

8. The preparation method according to claim 1, wherein a process of the sintering comprises a first section of sintering and a second section of sintering that are conducted sequentially, wherein a temperature of the first section of sintering is 300-500°C, and a time of the first section of sintering is 3-6 h; and a temperature of the second section of sintering is 700-750°C, and a time of the second section of sintering is 8-15 h.

9. The preparation method according to claim 1, wherein a molar ratio of the lithium source to the phosphorus source is 1.02-1.06:1.

10. The preparation method according to claim 1, wherein the carbon source is 10-25wt% of the total amount of the iron phosphate precursor, the lithium source and the carbon source.
